# DEMANDE DE BREVET EUROPEEN

(11) **EP 4 006 941 A1**
(43) Date de publication de la demande: **01.06.2022**
(21) Numéro de dépôt: 21209664.8
(22) Date de dépôt: 22.11.2021
(51) Int. Cl.: H01H 37/32, H01H 37/36, H01H 37/46, H01H 37/52, H01M 50/581, H01M 50/213, H01M 50/367

(54) **DISPOSITIF D'ALIMENTATION ÉLECTRIQUE COMPRENANT UN ACTIONNEUR THERMOSENSIBLE ET APPAREIL ASSOCIÉ**

(30) Priorité: 25.11.2020 FR 2012141
(71) Demandeur: Commissariat à l'Energie Atomique et aux Energies Alternatives, 75015 Paris (FR)
(72) Inventeur: PANARIELLO, Remy, 38054 GRENOBLE Cedex 09 (FR); BEY, Mehdi, 38054 GRENOBLE Cedex 09 (FR); MASSON, Olivier, 38054 GRENOBLE Cedex 09 (FR); PERICHON, Pierre, 38054 GRENOBLE Cedex 09 (FR)
(74) Mandataire: Decobert, Jean-Pascal

(57) **Abrégé**

L'invention concerne un dispositif d'alimentation électrique comprenant une unité de stockage (10) d'énergie électrique, et un support (11) de l'unité de stockage (10) au moins dans une première position, dans laquelle l'unité de stockage(10) est solidaire et raccordée électriquement au support (11). Le dispositif comprend en outre un système de connexion de l'unité de stockage au support, avec un actionneur (120) comprenant un élément thermosensible (1200). Lorsque la température de l'élément thermosensible (1200) dépasse une température seuil, l'élément thermosensible (1200) est configuré de façon à induire un déplacement relatif de l'unité de stockage (10) par rapport au support (11), de la première position à une deuxième position. Dans la deuxième position, l'unité de stockage (10) est dans un état de moindre connexion thermique avec le support (11), et/ou l'unité de stockage n'est pas raccordée électriquement au support (11).

## Description

### DOMAINE TECHNIQUE

La présente invention concerne le domaine des dispositifs d'alimentation électrique comprenant au moins une unité de stockage d'énergie électrique, telle qu'une batterie. Elle trouve pour application particulièrement avantageuse le domaine de la fourniture d'énergie électrique pour des appareils alimentés par des batteries lithium-ion.

### ETAT DE LA TECHNIQUE

Une multitude d'appareils est alimentée électriquement par des dispositifs d'alimentation électrique comprenant des unités de stockage d'énergie électrique, telles que des batteries, et notamment des batteries lithium-ion. Lors de la vie d'un appareil, des défauts de fonctionnement des unités de stockage peuvent survenir. Une unité de stockage peut plus particulièrement subir une surchauffe, voire un emballement thermique, durant lesquels la température de l'unité s'élève anormalement. Un risque est alors de propager le défaut de fonctionnement dans le dispositif d'alimentation électrique, par exemple de l'unité de stockage à d'autres unités, voire au reste de l'appareil.

Afin de limiter cela, il existe des dispositifs d'alimentation électrique visant à isoler l'unité de stockage lors d'un défaut de fonctionnement. Il est notamment connu de l'état de la technique, des dispositifs fusibles dans lequel chaque unité de stockage est reliée à un jeu de barres par un fil fusible. Lorsqu'un fil fusible dépasse une température seuil prédéterminée, le fil fusible fond et déconnecte électriquement l'unité de stockage correspondante du jeu de barres.

Par ailleurs, différents systèmes de commutation électrique permettent d'isoler électriquement une unité de stockage défectueuse, par le biais d'actionneurs électroniques ou électromagnétiques. Il est notamment connu de l'état de la technique des dispositifs d'alimentation électrique dans lesquels un actionneur électromagnétique présente une configuration de connexion électrique de l'unité de stockage et une configuration de déconnexion électrique de l'unité de stockage. Le passage de la configuration de connexion à la configuration de déconnexion de l'actionneur peut être activé par la température, par exemple lors d'une surchauffe de l'unité de stockage.

Ces dispositifs restent en pratique limités pour limiter la propagation d'un défaut de fonctionnement.

Un objet de la présente invention est donc de proposer un dispositif d'alimentation électrique améliorant la déconnection d'une unité de stockage lors d'un défaut de fonctionnement.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un dispositif d'alimentation électrique comprenant :
- au moins une unité de stockage d'énergie électrique,
- un support configuré pour recevoir l'au moins une unité de stockage au moins dans une première position, dans laquelle l'au moins une unité de stockage est solidaire et raccordée électriquement au support,
- un système de connexion de l'au moins une unité de stockage au support, comprenant un actionneur, l'actionneur comprenant un élément thermosensible.

Avantageusement, lorsque la température de l'élément thermosensible dépasse une température seuil prédéterminée, l'élément thermosensible est configuré pour exercer une force sur au moins l'un parmi l'unité de stockage et le support, de façon à induire un déplacement relatif de l'au moins une unité de stockage par rapport au support, de la première position à une deuxième position, dans laquelle l'au moins une unité de stockage est dans un état de moindre connexion thermique avec le support et/ou dans un état dans lequel l'au moins une unité de stockage n'est pas raccordée électriquement au support.

Grâce au déplacement relatif de l'unité de stockage, le système de connexion déconnecte électriquement et/ou au moins partiellement thermiquement l'unité de stockage du support.

Un défaut de fonctionnement d'une unité de stockage, par exemple une surchauffe ou un emballement thermique, peut se propager notamment par conduction thermique, et/ou par les raccords électriques par exemple entre les unités de stockage d'un même étage. En outre, si une unité de stockage reste en fonctionnement lors d'un défaut de fonctionnement, des gaz peuvent être éjectés de l'unité et se propager pour attaquer d'autres unités de stockage.

Le déplacement relatif de l'unité de stockage peut d'une part réduire sa connexion thermique avec le support. Ainsi, la propagation de l'échauffement de l'unité dans le dispositif d'alimentation, et notamment aux autres unités de stockage, est limitée. Le risque d'un emballement thermique généralisé à plusieurs unités de stockage peut donc être minimisé, voire évité.

D'autre part, lors du déplacement relatif, l'unité de stockage peut être déconnectée électriquement du support. Le fonctionnement de l'unité peut ainsi être stoppé lors d'une surchauffe, voire d'un emballement thermique.

De préférence, dans la deuxième position, l'au moins une unité de stockage est dans un état de moindre connexion thermique avec le support, et l'au moins une unité de stockage n'est pas raccordée électriquement au support. Ainsi, de façon synergique entre déconnexion thermique et électrique, les principaux vecteurs de propagation d'un défaut de fonctionnement dans le dispositif, voire dans l'appareil le comprenant, sont coupés.

Par rapport aux solutions existantes mettant en œuvre un fil ou un élément fusible qu'il faut renouveler après chaque défaut, le dispositif présente en outre un coût réduit.

Un autre aspect concerne un appareil comprenant au moins un dispositif d'alimentation électrique selon le premier aspect.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1A représente une vue en perspective du dispositif d'alimentation selon un exemple de réalisation de l'invention.
La figure 1B représente une vue en coupe longitudinale du dispositif d'alimentation illustré en figure 1A, dans la première position.
La figure 2A représente une vue en coupe longitudinale du dispositif d'alimentation illustré en figure 1B, dans une deuxième position.
La figure 2B représente une vue en coupe longitudinale du dispositif d'alimentation illustré en figure 1B, dans une deuxième position distincte de celle illustrée en figure 2A.
La figure 3 représente une vue de côté du dispositif d'alimentation selon un autre exemple de réalisation de l'invention.
La figure 4 représente une vue en perspective du dispositif d'alimentation selon un exemple dans lequel le support comprend un circuit imprimé.
La figure 5 représente une vue en coupe longitudinale du dispositif d'alimentation selon un exemple de réalisation de l'invention.
La figure 6 représente une vue en coupe longitudinale du dispositif d'alimentation illustré en figure 5, dans une deuxième position.
La figure 7A représente une vue en coupe longitudinale du dispositif d'alimentation illustré en figure 5, dans une deuxième position distincte de celle illustrée en figure 6.
La figure 7B représente une vue en coupe longitudinale du dispositif d'alimentation selon l'exemple illustré en figure 7A, une fois l'élément thermosensible revenu à une température inférieure à la valeur seuil.
La figure 8A représente une vue en perspective de l'unité de stockage et du système de connexion selon un exemple de réalisation de l'invention, l'élément thermosensible étant dans une configuration rétractée.
La figure 8B représente une vue en coupe longitudinale de l'unité de stockage et du système de connexion illustré en figure 8A.
La figure 9A représente une vue en coupe longitudinale de l'unité de stockage et du système de connexion selon un exemple de réalisation de l'invention, l'élément thermosensible étant dans une configuration déployée.
La figure 9B représente une vue en coupe longitudinale de l'unité de stockage et du système de connexion selon un exemple de réalisation de l'invention, l'élément thermosensible étant dans une configuration plus déployée qu'en figure 9A.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives de l'appareil et du dispositif d'alimentation ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- l'élément thermosensible présente une configuration rétractée et une configuration déployée,
- lorsque la température de l'élément thermosensible dépasse la température seuil prédéterminée, l'élément thermosensible passe de l'une parmi la configuration rétractée ou la configuration déployée, à l'autre parmi la configuration rétractée ou la configuration déployée, induisant l'exercice de la force sur au moins l'un parmi l'unité de stockage et le support,
- l'élément thermosensible est à base ou fait d'un matériau présentant une transition de phase à la température seuil déterminée,
- l'élément thermosensible est à base ou fait d'un alliage à mémoire de forme,
- l'élément thermosensible est un ressort à mémoire de forme,
- l'élément thermosensible est à base ou fait d'un matériau présentant un changement d'état à la température seuil déterminée,
- l'élément thermosensible est à base ou fait d'un matériau expansif avec la température, et notamment avec une augmentation de la température, par exemple au-dessus d'une température seuil,
- l'élément thermosensible est à base ou fait d'un matériau présentant un état plus expansé dans sa configuration déployée que dans sa configuration rétracté,
- l'élément thermosensible est à base ou fait d'une poudre expansive,
- l'élément thermosensible est configuré de sorte que la température seuil prédéterminée soit comprise entre une température de surchauffe et une température d'emballement thermique de l'au moins une unité de stockage,
- la température seuil prédéterminée est comprise entre 60 °C et 120 °C,
- le système de connexion comprend des connecteurs électriques reliés électriquement à l'unité de stockage, le support comprend des connecteurs électriques complémentaires et disposés en regard des connecteurs du système de connexion, et le déplacement relatif de la première position à la deuxième position entraîne un éloignement relatif des connecteurs électriques du système de connexion par rapport aux connecteurs électriques du support.
- les connecteurs électriques sont configurés pour connecter au moins électriquement l'au moins une unité de stockage au support, au moins dans la première position,
- les connecteurs électriques sont configurés pour solidariser et connecter électriquement l'au moins une unité de stockage au support,
- les connecteurs électriques soit choisis parmi des connecteurs attirés l'un par l'autre par une force d'attraction, par exemple des connecteurs magnétiques, des fiche bananes, des connecteurs électriques élastiques,
- les connecteurs du système de connexion sont des fiches banane. Selon cet exemple, les connecteurs du support sont des connecteurs receveur de fiche banane,
- le déplacement relatif de la première position à la deuxième position entraîne un éloignement relatif des connecteurs électriques du système de connexion par rapport aux connecteurs électriques du support suffisant pour déconnecter électriquement l'unité de stockage,
- le déplacement relatif de la première position à la deuxième position présente une longueur de course selon une direction, et les connecteurs électriques présentent une longueur selon cette direction, la longueur de course du déplacement relatif étant supérieure à la longueur des connecteurs électriques,
- le support est configuré pour guider l'unité de stockage selon un mouvement principal de translation lors du déplacement relatif de la première position à la deuxième position,
- l'au moins une unité de stockage est solidaire du support dans la deuxième position. Lors du déplacement relatif de la première à la deuxième position, l'au moins une unité de stockage peut rester solidaire du support,
- le système de connexion comprend un module anti-retour configuré pour empêcher un déplacement relatif de l'au moins une unité de stockage par rapport au support, de la deuxième position à la première position,
- le module anti-retour est distinct de l'élément thermosensible,
- le module anti-retour empêche le déplacement relatif de l'au moins une unité de stockage par rapport au support, indépendamment de l'élément thermosensible et notamment de la force générée par l'élément thermosensible. Ainsi, quel que soit la configuration de l'élément thermosensible, et notamment quelle que soit la température de l'élément thermosensible, le module anti-retour peut empêcher le retour à la première position de l'unité de stockage. Plus particulièrement, le module anti-retour n'agit pas sur les configurations rétractée et déployée de l'élément thermosensible,
- l'au moins une unité de stockage est désolidarisée du support lors du déplacement relatif de la première à la deuxième position,
- l'au moins une unité de stockage est désolidarisée du support lors du déplacement relatif de la première à la deuxième position de sorte que l'unité de stockage n'est plus reliée au support dans la deuxième position. De façon équivalente, dans la deuxième position, l'unité de stockage n'est pas reliée mécaniquement et électriquement au support. Dans la deuxième position, l'unité de stockage peut être isolée du dispositif, pour limiter encore la propagation du défaut thermique. Par exemple, l'unité de stockage peut tomber dans un compartiment de réception de l'unité de stockage défectueuse, par exemple dans un bain d'un fluide diélectrique, d'un fluide conducteur électrique, ou encore de granulé, voire être éjectée du dispositif.
- le support comprend un circuit imprimé, et plus particulièrement un système de contrôle de batterie (communément abrégé BMS, de l'anglais *Battery Management system*).

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces». L'expression « A est raccordée électriquement avec B » peut signifier que A est directement raccordée sur B ou bien indirectement par le biais d'un autre élément, par exemple via un fusible ou un interrupteur.

Le terme mobile correspond à un mouvement de rotation ou à un mouvement de translation ou encore à une combinaison de mouvements, par exemple la combinaison d'une rotation et d'une translation.

Le terme « solidaire » utilisé pour qualifier la liaison entre deux pièces signifie que les deux pièces sont liées/fixées l'une par rapport à l'autre, selon au moins un degré de liberté. Par exemple, s'il est indiqué que deux pièces sont solidaires en translation selon une direction Y, cela signifie que les pièces peuvent être mobiles l'une par rapport à l'autre, possiblement selon plusieurs degrés de liberté, à l'exclusion de la liberté en translation selon la direction Y. Autrement dit, si on déplace une pièce selon la direction Y, l'autre pièce effectue le même déplacement.

On entend par un actionneur ou un élément « thermosensible », un actionneur ou un élément dont les propriétés peuvent être modifiées sensiblement autour d'une température seuil. Plus particulièrement, la forme de l'actionneur ou de l'élément peut être modifiée autour de la température seuil. Dans le cadre de la présente invention, lorsqu'il est dit que lorsque la température de l'élément thermosensible dépasse une température seuil prédéterminée, l'élément thermosensible est configuré pour exercer une force sur au moins l'un parmi l'unité de stockage et le support, cela signifie que l'élément thermosensible génère la force induisant le déplacement de l'unité de stockage lorsque sa température dépasse la température seuil prédéterminée. Ceci exclut donc un système où une force générée par l'actionneur, y compris en dessous de la température seuil, est retenue par un élément thermosensible, tel qu'un matériau fusible. En dessous de la température seuil, la force générée par l'élément thermosensible est non suffisante pour induire le déplacement de l'unité de stockage par rapport au support, et de préférence nulle. En dessus de la température seuil, la force générée par l'élément thermosensible est suffisante pour induire le déplacement de l'unité de stockage par rapport au support. Il y a donc une augmentation de la force générée par l'élément thermosensible lorsque sa température dépasse la température seuil prédéterminée.

On entend par un élément « à base » d'un matériau A, un élément comprenant ce matériau A uniquement ou ce matériau A et éventuellement d'autres matériaux. Par exemple, l'élément comprend un matériau A et une enveloppe configurée pour contenir l'élément A, l'enveloppe pouvant être formée d'au moins un matériau distinct du matériau A.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Dans la description détaillée qui suit, il pourra être fait usage de termes tels que « longitudinal », « transversal », « avant », « arrière », « intérieur », « extérieur ». Ces termes doivent être interprétés de façon relative en relation avec la position relative des composants du dispositif d'alimentation. La direction « longitudinale » peut notamment correspondre à la direction principale du déplacement relatif de l'unité de stockage par rapport au support. La direction « longitudinale » peut en outre correspondre à la direction d'extension principale de l'unité de stockage.

«Interne » désigne les éléments ou les faces tournées vers l'intérieur du dispositif, et «externe » désigne les éléments ou les faces tournées vers l'extérieur du dispositif. Selon un exemple, l'unité de stockage présentant un axe central A, « interne » désigne les éléments ou les faces tournées vers cet axe, et «externe » désigne les éléments ou les faces tournées à l'opposé de cet axe central.

On utilisera également un repère dont la direction longitudinale ou avant/arrière correspond à l'axe x, la direction transversale correspond à l'axe y.

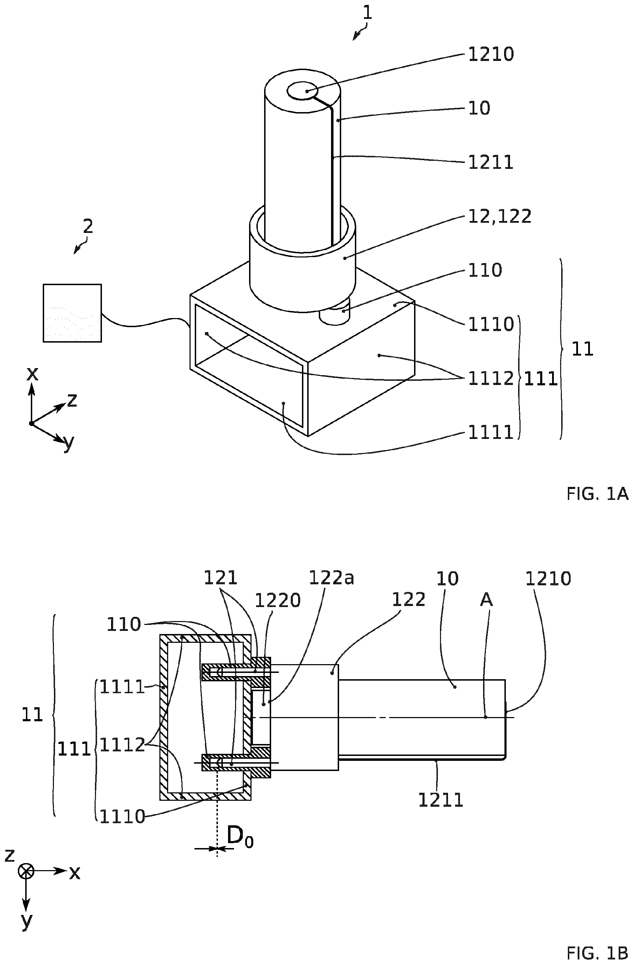

Le dispositif 1 d'alimentation électrique, et l'appareil 2 le comprenant, sont maintenant décrits en référence à un exemple illustré par les figures 1A à 2B. L'appareil 2, illustré schématiquement en figure 1A, peut être issu de tout domaine d'application, tel que des appareils mobiles ou stationnaires, des appareils pour des applications de transport. Plus particulièrement, l'appareil 2 peut être configuré pour être alimenté électriquement par une batterie lithium-ion.

La cinématique de fonctionnement du dispositif 1 est tout d'abord décrite en référence aux figures 1A à 2B. Le dispositif 1 comprend une, voire plusieurs unité(s) de stockage 10. Les unités de stockage 10 d'énergie électrique forment des briques élémentaires de stockage électrique, aussi appelées accumulateur ou cellules. Ces unités peuvent être connectées en parallèle et ou en série pour constituer un ensemble d'alimentation, communément appelé module de batterie. Un ensemble de modules raccordés en série ou en parallèle constitue généralement un pack-batterie, de tension et capacité plus importante. La cinématique de fonctionnement qui suit est décrite à titre non limitatif pour une unité de stockage 10. Le dispositif 1 comprend un support 11 configuré pour recevoir l'unité de stockage 10. Le dispositif 1 comprend en outre un système de connexion 12 de l'unité de stockage 10 au support 11. Le système de connexion 12 est configuré pour déconnecter électriquement et/ou au moins partiellement thermiquement l'unité de stockage 10 du support 11 lors d'un défaut de fonctionnement. Ce défaut de fonctionnement peut plus particulièrement être une surchauffe, voire un emballement thermique. Le système de connexion 12 est donc plus particulièrement configuré pour déconnecter l'unité de stockage 10 en fonction de sa température.

Pour cela, le système de connexion 12 comprend un actionneur 120 thermosensible. L'actionneur 120 comprend un élément 1200 thermosensible, configuré de sorte que ses propriétés sont modifiables autour d'une température seuil prédéterminée.

Lorsque la température dans le dispositif 1, et plus particulièrement la température de l'unité de stockage 10, est inférieure à la température seuil, l'unité de stockage 10 et le support 11 sont dans une première position relativement l'un à l'autre. Dans cette première position, illustrée par exemple en figures 1A et 1B, l'unité de stockage 10 est solidaire et raccordée électriquement au support 11. L'unité de stockage 10 peut notamment être solidaire du support 11 selon tous ses degrés de liberté.

Lors du défaut de fonctionnement, l'unité de stockage 10 peut surchauffer. Classiquement, lorsque qu'une unité de stockage 10 est solidaire et raccordée électriquement à son support 11, ce défaut peut se propager dans le dispositif 1, voire au reste de l'appareil 2. Les principaux vecteurs de propagation du défaut dans un dispositif 1 d'alimentation, par exemple entre différentes unités de stockage 10, sont :
- la conduction thermique par les conducteurs électriques du dispositif 1,
- la conduction thermique par les pièces structurelles du dispositif 1, par exemple son support 11,
- une propagation électrique, par exemple un défaut de court-circuit interne d'une unité de stockage peut se transformer en défaut de court-circuit externe pour les unités du même étage
- la convection naturelle,
- la convection forcée des gaz éjectés par une unité de stockage en défaut,
- les projections de composés chimiques; le rayonnement et les départs de feu issus de l'unité de stockage en défaut.

Lors du défaut de fonctionnement, la température de l'unité de stockage 10 peut s'élever au-dessus de la température seuil. L'élément thermosensible 1200 de l'actionneur 120 peut être relié thermiquement à l'unité de stockage 10, par contact direct ou via l'environnement entre l'élément thermosensible 1200 et l'unité de stockage. Par conduction thermique, la température de l'élément thermosensible 1200 peut à son tour s'élever au-dessus de la température seuil.

Au moins une propriété de l'élément thermosensible 1200 peut alors être modifiée de sorte que l'élément thermosensible 1200 exerce une force F sur l'unité de stockage 10 et/ou le support 11. Par l'application de cette force F, un déplacement relatif de l'unité de stockage 10 par rapport au support 11 est induit, de la première position à une deuxième position. Plus particulièrement, la propriété de l'élément thermosensible 1200 peut être modifiée de façon passive, sans intervention d'un utilisateur.

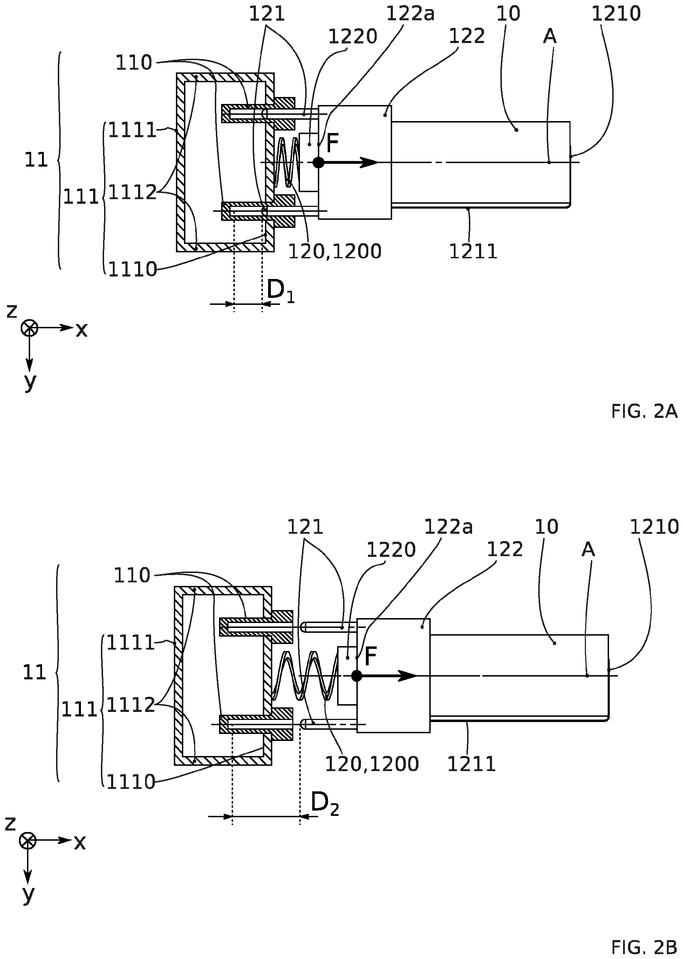

A titre d'exemple, la deuxième position est illustrée en figures 2A et 2B. Dans la deuxième position, l'unité de stockage 10 peut être dans un état de moindre connexion thermique avec le support 11. Ainsi, la propagation de l'échauffement de l'unité de stockage 10 au support 11 est réduite par rapport à la première position. La conduction thermique de cet échauffement par le support 11 au reste du dispositif 1, par exemple à d'autres unités de stockage 10, ou à l'appareil 2 est ainsi réduite. Dans l'état de moindre connexion thermique, la surface de contact entre l'unité de stockage 10 et le support 11 peut être réduite, voire nulle. Cette surface de contact peut être un contact direct entre l'unité de stockage 10 et le support 11, ou par l'intermédiaire d'autres pièces.

En alternative ou en complément, l'unité de stockage 10 n'est pas raccordée électriquement au support 11 dans la deuxième position. Ainsi, le fonctionnement de l'unité de stockage 10 peut être interrompu en cas de surchauffe. Le risque de propagation du défaut de fonctionnement par court-circuit, ou par éjection de gaz issu de l'unité de stockage en défaut, est ainsi évité. Ces gaz étant généralement de nature corrosive, leur propagation dans le dispositif 1 est minimisée. Afin de limiter encore la propagation de ces gaz, le dispositif 1 peut en outre comprendre un système d'aération 13, décrit plus en détail ultérieurement.

De par la déconnexion thermique au moins partielle et/ou la déconnexion électrique, le dispositif 1 est sécurisé. De préférence, dans la deuxième position, l'unité de stockage 10 est déconnectée électriquement du support 11 et est dans un état de moindre connexion thermique avec le support 11. Ainsi, le risque qu'une surchauffe de l'unité de stockage en défaut se propage à d'autres unités de stockage 10 ou à d'autres éléments du dispositif 1 est limité. De façon synergique entre ces deux caractéristiques, les principaux vecteurs de propagation du défaut de fonctionnement sont alors coupés. La sécurisation du dispositif 1 d'alimentation est encore augmentée.

La force F exercée par l'élément thermosensible 1200 peut être une force d'appui ou de traction. Selon un exemple, lorsque la température de l'élément thermosensible 1200 est inférieure à la température seuil, l'élément thermosensible 1200 est configuré pour exercer une force F inférieure à la valeur de force limite induisant un déplacement relatif de l'unité de stockage 10 par rapport au support 11. Ainsi en dessous de la température seuil, l'unité de stockage 10 et le support restent dans leur première position relative. La force F peut alors être environ nulle, de préférence totalement nulle. Par exemple lorsque la température de l'élément thermosensible 1200 est inférieure à la température seuil, l'élément thermosensible 1200 n'est pas en contact avec le support 11. Lorsque la température de l'élément sensible dépasse la température seuil, l'élément thermosensible est configuré pour exercer une force F supérieure à la valeur de force limite induisant un déplacement relatif de l'unité de stockage 10 par rapport au support 11. Lors d'un échauffement de la cellule, la force F est alors suffisante pour induire ce déplacement relatif.

Le système de connexion 12 peut être configuré pour autoriser un déplacement relatif de la première position à la deuxième position, et pour empêcher un déplacement passif de la deuxième position à la première position. Notamment le système de connexion 12 peut être configuré de sorte que, lorsque la température de l'élément thermosensible 1200 redevient inférieure à la température seuil, un déplacement relatif de la deuxième position à la première position est empêché. Ainsi, une reconnexion thermique et/ou électrique de l'unité de stockage 10 en défaut est empêchée, même si la température de l'élément thermosensible 1200 passe en dessous de la température seuil. La réapparition d'un défaut de fonctionnement est alors évitée.

De préférence, la température seuil est supérieure à la température normale de fonctionnement de l'unité de stockage 10. La température seuil peut être supérieure ou égale à la température de surchauffe, voire la température d'emballement thermique de l'unité de stockage 10. Plus préférentiellement encore, la température seuil est comprise entre la température de surchauffe et la température d'emballement thermique de l'unité de stockage. Ainsi, la déconnexion de l'unité de stockage est effectuée avant son emballement thermique. La température seuil peut par exemple être sensiblement comprise entre 60 °C et 120 °C, cette gamme de température étant particulièrement adaptée à l'exemple selon lequel les unités de stockages sont des batteries lithium-ion. La température seuil peut par exemple être sensiblement égale à 90 °C.

Pour déplacer l'unité de stockage 10 de la première position à la deuxième position, l'élément thermosensible 1200 peut être mobile entre une configuration rétractée et une configuration déployée. Lorsque la température de l'élément thermosensible 1200 dépasse la température seuil prédéterminée, l'élément thermosensible 1200 peut passer de la configuration rétractée à la configuration déployée, et appliquer une force F d'appui. En alternative, l'élément thermosensible 1200 peut passer de la configuration déployée à la configuration rétractée, et appliquer une force F de traction. Ce mouvement de l'élément thermosensible 1200 peut ainsi induire l'exercice de la force F. Le passage de la première position à la deuxième position est ainsi actionné de façon simple, ce qui réduit le coût du dispositif 1. Selon un exemple, l'élément thermosensible 1200 est monolithique, simplifiant encore le dispositif 1.

Selon un exemple, l'élément thermosensible 1200 passe de l'une parmi sa configuration rétractée ou sa configuration déployée à l'autre parmi sa configuration rétractée ou sa configuration déployée, selon un mouvement principal de translation. Ce mouvement de translation peut être sensiblement parallèle à la direction longitudinale x, comme illustré dans les figures 2A et 2B.

Dans la suite de la description, on se réfère à l'exemple non-limitatif selon lequel l'élément thermosensible 1200 exerce une force F d'appui sur l'unité de stockage 10, lors de son passage de sa configuration rétractée à sa configuration déployée. Ceci induit alors un déplacement absolu de l'unité de stockage 10 par rapport au support 11. A titre d'exemple, la force F est illustrée par la flèche dans les figures 2A et 2B.

Comme illustré en figure 2A, dans une première configuration déployée, l'élément thermosensible 1200 peut être configuré de sorte que l'unité de stockage 10 est éloignée du support 11, tout en restant connectée électriquement au support 11. Comme illustré en figure 2B, dans une deuxième configuration déployée, l'élément thermosensible 1200 peut être configuré de sorte que l'unité de stockage 10 est plus éloignée du support 11 que dans la première position, et est déconnectée électriquement du support 11. On peut prévoir que ces configurations déployées soient successives. Notamment, le passage de la configuration rétractée à la première configuration déployée peut avoir lieu à une première température seuil. Le passage de la première configuration déployée à la deuxième configuration déployée peut avoir lieu à une deuxième température seuil, par exemple supérieure à la première température seuil.

La coopération entre l'unité de stockage 10, le support 11 et le système de connexion 12 est maintenant décrite en référence aux figures 1 à 4. Afin de raccorder électriquement l'unité de stockage 10 au support 11, chaque pôle de l'unité de stockage 10 peut être raccordé à un connecteur électrique 121 du système de connexion 12. Pour cela, et comme illustré en figure 2A, les pôles de l'unité de stockage 10 peuvent être reliés par un élément conducteur 1210 à un raccord 1211. Le raccord 1211 peut être relié à un connecteur électrique 121 du système de connexion 12. L'élément conducteur 1210 est par exemple une pastille conductrice 1210.

Le système de connexion 12 peut comprendre un socle 122 monté sur l'unité de stockage. Le socle 122 peut entourer au moins partiellement l'unité de stockage 10. Le socle 122 peut être disposé entre le support 11 et l'unité de stockage 10 de façon à les isoler électriquement. Par exemple, le socle est à base d'un polymère thermoplastique. Les connecteurs électriques 121 peuvent être monté sur le socle, par exemple sur sa face arrière 122a, et permettre le raccord électrique entre le support 11 et l'unité de stockage 10.

Le support 11 peut comprendre des connecteurs électrique 110 complémentaires des connecteurs 121. Les connecteurs 110 du support 11 peuvent être reliés en série et/ou en parallèle par un bus de puissance (désigné en anglais par « *busbar* ») du support 11. Un bus de puissance consiste généralement en un jeu de barres ou en des pistes conductrices sur un circuit imprimé, par exemple en cuivre. Notons que les connecteurs 110 du support 11 peuvent être reliés en série et/ou en parallèle par tout type de réseau de puissance.

Selon l'exemple illustré dans les figures 1A à 2B, le support 11 peut comprendre une base 111 présentant une face avant 1110 sur laquelle les connecteurs électriques 110 sont disposés. La base 111 peut en outre présenter des faces latérales 1112 reliant une face arrière 1111 à la face avant 1110. Entre ses faces, la base 111 peut ainsi définir un espace dans lequel les connecteurs 110 s'étendent.

Selon un exemple, les connecteurs électriques 121, 110 sont configurés pour connecter électriquement l'unité de stockage 10 au support 11, au moins dans la première position. Les connecteurs électriques 121, 110 peuvent en complément être configurés pour solidariser l'unité de stockage 10 au support 11, dans la première position. La connexion, voire la déconnexion, électrique et mécanique de l'unité de stockage 1 au support est ainsi simplifiée.

Pour cela, les connecteurs électriques 121, 110 peuvent s'étendre sensiblement selon la même direction que celle du déplacement de l'unité de stockage 10 de la première à la deuxième position. Par exemple, les connecteurs électriques 121, 110 peuvent s'étendre une direction x sensiblement parallèle au mouvement de translation de l'élément thermosensible 1200 entre sa configuration rétractée et sa configuration déployée.

Les connecteurs 121, 110 peuvent être des connecteurs attirés l'un par l'autre par une force d'attraction. Lors de son passage de sa configuration rétractée à sa configuration déployée, l'élément thermosensible 1200 peut exercer une force F d'appui sur l'unité de stockage 10 suffisante pour contrer cette force d'attraction et ainsi induire la déconnection de l'unité de stockage 10. Par exemple, les connecteurs 121, 110 peuvent être des connecteurs magnétiques. Les connecteurs électriques 121, 110 peuvent ne pas s'étendre significativement selon la direction x sensiblement parallèle au mouvement de translation de l'élément thermosensible 1200 entre sa configuration rétractée et sa configuration déployée.

Le déplacement de la première position à la deuxième position peut entraîner un éloignement relatif des connecteurs électriques 121 du système de connexion 12 par rapport aux connecteurs électriques 110 du support 11. Cet éloignement est de préférence suffisant pour entrainer la déconnexion des connecteurs 121, 110. Par exemple, comme illustré dans les figures 1B, 2A, 2B, dans la première position les connecteurs électriques 121 du système de connexion 12 peuvent être longitudinalement espacés des connecteurs électriques 110 du support 11 par une distance D₀. Dans la deuxième position illustrée en figure 2A, les connecteurs électriques 121 du système de connexion 12 peuvent être longitudinalement espacés des connecteurs électriques 110 du support 11 par une distance D₁. Dans la deuxième position illustrée en figure 2B, les connecteurs électriques 121 du système de connexion 12 peuvent être longitudinalement espacés des connecteurs électriques 110 du support 11 par une distance D₂. De préférence, D₂ > D₁ > D₀.

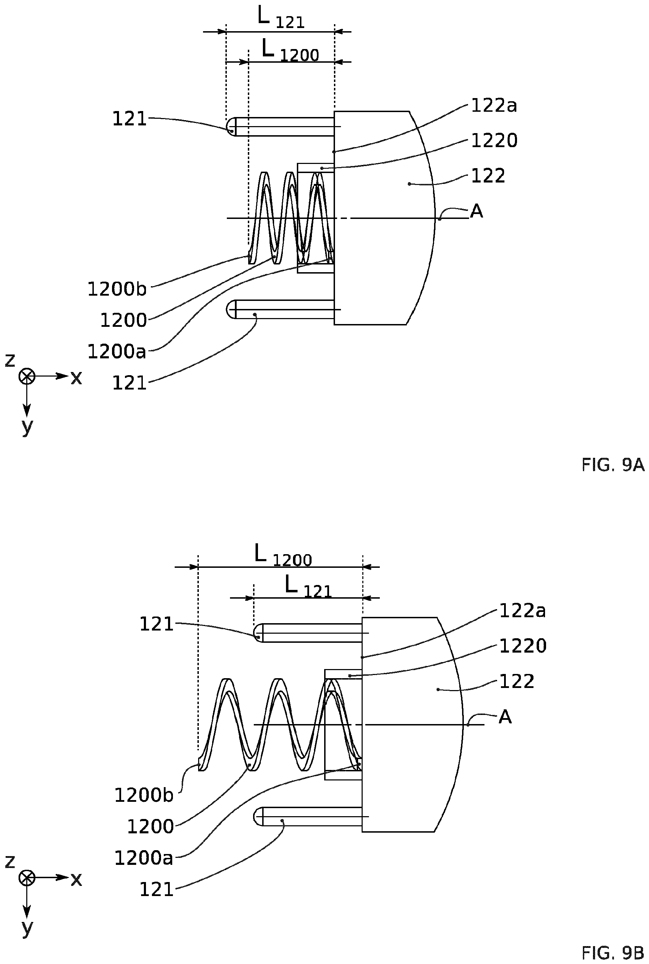

Pour que, dans la deuxième position, l'unité de stockage 10 soit éloignée du support 11 tout en étant raccordée électriquement au support 11, le déplacement de la première position à la deuxième position peut présenter une longueur de course, par exemple selon la direction longitudinale x. Les connecteurs électriques 121, 110, et notamment les connecteurs électriques 122 du système de connexion 12, peuvent alors présenter une longueur sensiblement supérieure à la longueur de course du déplacement. Comme illustrée en figure 9A, dans sa configuration déployée, l'élément thermosensible 1200 peut présenter une longueur L₁₂₀₀ inférieure à la longueur L₁₂₁ des connecteurs 121, selon la direction x.

Pour que, dans la deuxième position, l'unité de stockage 10 soit éloignée et déconnectée électriquement du support 11, les connecteurs électriques 121, 110, et notamment les connecteurs électriques 122 du système de connexion 12, peuvent présenter une longueur sensiblement inférieure à la longueur de course du déplacement. Comme illustrée en figure 9B, dans sa configuration déployée, l'élément thermosensible 1200 peut présenter une longueur L₁₂₀₀ supérieure à la longueur L₁₂₁ des connecteurs 121, selon la direction x.

Selon un exemple, les connecteurs 121 du système de connexion 12 sont des fiches bananes (désignées en anglais par « *Banana connectors* »). Selon cet exemple, le connecteur 110 du support 11 est un connecteur receveur d'une fiche banane. Ce type de connecteurs permet un raccord électrique et une solidarisation de l'unité de stockage 10 au support 11. En outre, ce type de connecteurs est robuste et facilement commercialement disponible, ce qui limite le coût du dispositif 1.

Selon un autre exemple, les connecteurs 121 du système de connexion 12 sont des connecteurs électriques élastiques, tels que des connecteurs à ressort, par exemple à lame ou comprenant un ressort à spire. Selon cet exemple, le connecteur 110 du support 11 est un connecteur complémentaire au connecteur élastique 121.

Notons que la nature et les dimensions des connecteurs et des conducteurs électriques du dispositif 1 peuvent être adaptés pour correspondre aux courants nominaux et maximums pouvant être délivrés par la ou les unité(s) de stockage 10.

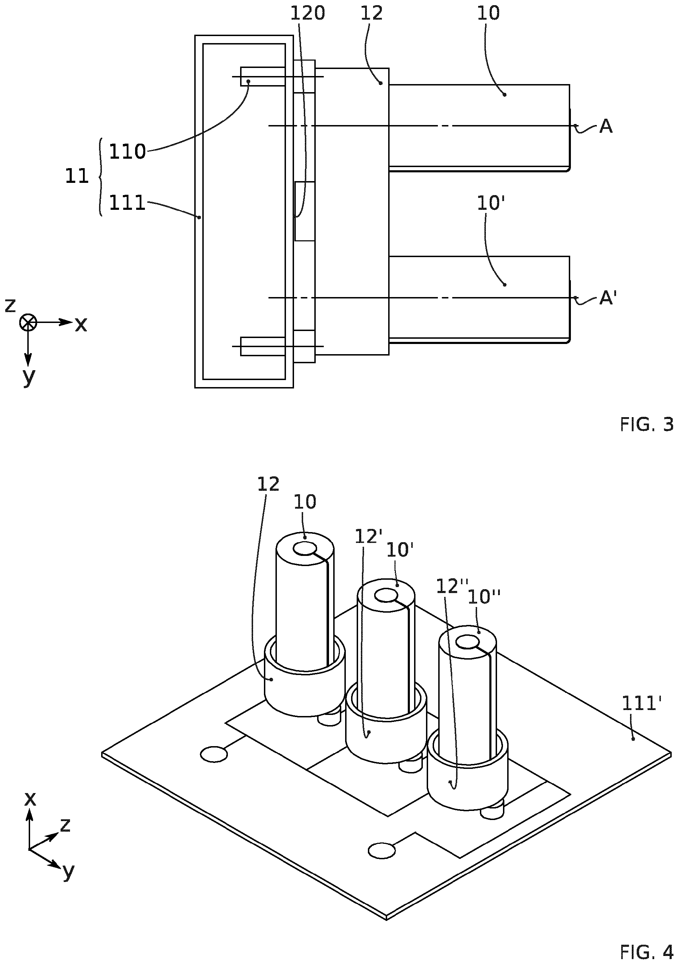

Comme illustrée en figure 3, le système de connexion 12 peut être adapté pour connecter ensemble plusieurs cellules 10, 10'. Un système de connexion 12 peut ainsi connecter plusieurs cellules de stockage 10,10' au support 11 via une même paire de connecteurs 110 du support 11, et un seul actionneur thermosensible 120. En alternative, comme illustré en figure 4, un système de connexion 12 peut comprendre plusieurs modules 12, 12' 12" configuré pour connecter indépendamment plusieurs cellules de stockage 10,10', 10", chaque module comprenant son propre actionneur thermosensible 120. Selon un exemple, on peut prévoir qu'un système de connexion 12 comprenne plusieurs actionneurs 12, par exemple plusieurs actionneurs 12 par module. Ces actionneurs peuvent être répartis le long du système de connexion 12 pour améliorer encore sa réactivité lors d'un défaut d'une unité de stockage 10.

Selon un exemple, le support 11 comprend un bus de puissance, par exemple un jeu de barres. Selon l'exemple illustré en figure 4, le support 11 comprend un bus de puissance sous la forme d'un circuit imprimé 111', par exemple un système de gestion de batterie (communément abrégé BMS, de l'anglais par « *Battery Management System »).* Le dispositif d'alimentation 1 permet ainsi d'augmenter les fonctionnalités d'un BMS, et notamment de permettre une sécurisation passive d'un BMS.

Lors du déplacement de la première à la deuxième position, l'unité de stockage 10 peut être désolidarisée du support 11, par exemple comme illustrée en figure 2B. L'unité de stockage 10 n'est alors plus reliée mécaniquement au support 11. Une fois désolidarisée, l'unité de stockage 10 peut être isolée du dispositif 1. Par exemple, l'unité de stockage 10 peut tomber dans un bain :
- d'un fluide diélectrique, tel que de l'huile ou un gaz,
- d'un fluide conducteur électrique, tel que de l'eau salée),
- de granulé, tel que de la vermiculite des granulés CellBlock^{®}.

L'impact de l'unité de stockage 10 en défaut sur le reste du dispositif 1, voire de l'appareil 2, peut ainsi être minimisé. Cet exemple de réalisation est particulièrement adapté aux dispositifs 1 d'alimentation électrique stationnaires ou embarqués, de grande taille. L'appareil 2 ou le dispositif d'alimentation 1 peut en effet être suffisamment grand pour comprendre un compartiment de réception de l'unité de stockage 10 défectueuse.

Dans la deuxième position, l'unité de stockage 10 peut en outre être éjectée de l'appareil 2. Cet exemple de réalisation est particulièrement adapté à un drone survolant la mer. Dans le cas où une unité de stockage 10 venait à surchauffer, l'éjection de l'unité à la mer aurait moins de conséquences que la perte de l'appareil complet. Les appareils pour applications spatiales pourraient également bénéficier d'une éjection d'une unité de stockage 10 en défaut.

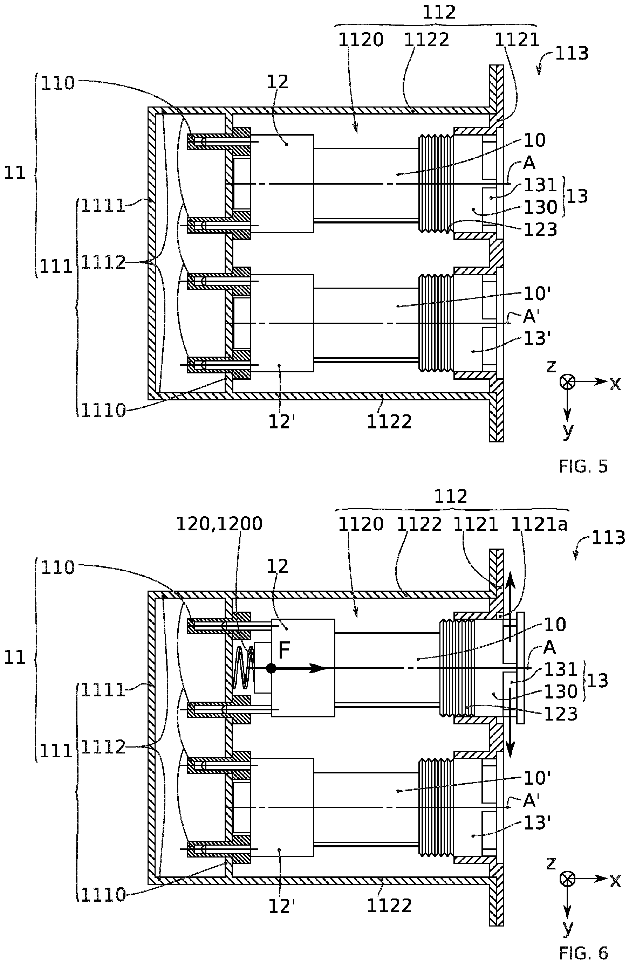

Lors du déplacement de la première à la deuxième position, le déplacement de l'unité de stockage 10 peut être guidé par le support 11. Par exemple, l'unité de stockage est guidée en translation par le support 11. Pour cela, et comme illustré par les figures 5 à 7B, le support 11 peut comprendre un cadre 112 délimitant un logement 1120 de l'unité de stockage 10, au moins dans la première position. Le cadre 112 peut comprendre des faces latérales 1122, jointes par une face avant 1121. Les faces 1121, 1122 du cadre 112 peuvent entourer l'unité de stockage 10 dans la première position, comme illustré en figure 5. La face avant 1121 peut présenter les ouvertures 1121a disposées dans l'alignement de l'unité de stockage 10, selon son déplacement de la première à la deuxième position. Lors du passage de la première à la deuxième position, une unité de stockage 10 peut ainsi au moins en partie passer à travers une ouverture 1121a. Notons que l'unité de stockage 10 en défaut peut être éjectée du cadre 112 après le guidage en translation.

Si l'éjection de l'unité de stockage 10 n'est pas possible ou pas souhaitable, l'unité de stockage 10 peut rester solidaire du support 11 lors du déplacement de la première à la deuxième position. Pour cela, l'élément thermosensible 1200 peut être mécaniquement relié à l'unité de stockage 10 et au support 11. Une première portion 1200a, voire une première extrémité 1200a, peut être reliée à l'unité de stockage 10, par exemple par le biais du socle 122. Une deuxième portion 1200b, voire une deuxième extrémité 1200b, peut être reliée au support 11.

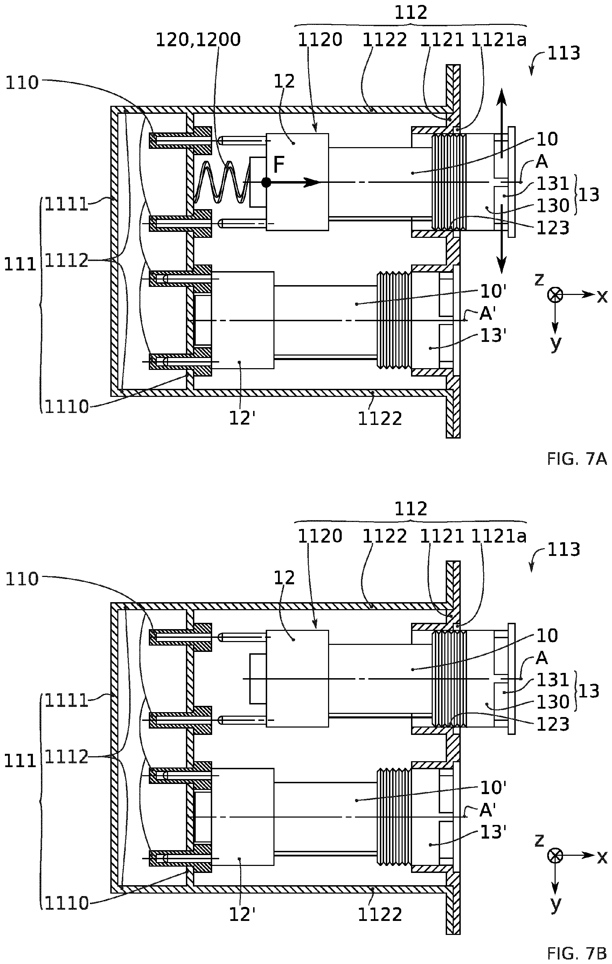

En alternative ou en complément, l'unité de stockage 10 peut être guidée par le support 11 comme décrit précédemment, de sorte que l'unité de stockage 10 reste au moins en partie logée dans le cadre 112 dans la deuxième position, comme illustré par les figures 6 et 7A.

Pour son guidage en translation, l'unité de stockage 10 peut être montée sur un socle 130 solidaire de l'unité de stockage 10. Le socle 130 peut recouvrir une extrémité de l'unité de stockage 10 et être disposé en regard d'une ouverture 1121a du cadre 112. Chaque socle 130 peut être de forme complémentaire à une ouverture 1121a, par exemple annulaire, afin de coulisser dans l'ouverture 1121a. Le socle 130 peut être disposé, sur l'unité de stockage 10, à l'opposé du socle 122 du système de connexion 12.

Comme énoncé précédemment, le système de connexion 12 peut être configuré de sorte que, lorsque la température de l'élément thermosensible 1200 redevient inférieure à la température seuil, le déplacement relatif de l'unité de stockage 10 est empêché de la deuxième position à la première position. Pour cela, le système de connexion peut comprendre module anti-retour 123.

Par exemple, le module anti-retour 123 comprend une butée, non représentée dans les figures, disposée sur le socle 130 et pouvant être bloquée au niveau de l'ouverture 1121a du cadre 112. Selon un exemple alternatif ou complémentaire, le socle 130 présente une surface externe configurée pour empêcher un mouvement retour du socle 130 de la deuxième à la première position. Par exemple, la surface externe du socle 130 présente des stries 123, comme illustrée dans les figures 5 à 7B. Selon un exemple alternatif ou complémentaire, le module anti-retour 123 peut comprendre un guide configuré pour orienter l'unité de stockage 10 dans une position empêchant sa reconnexion électrique. Le guide peut être configuré pour guider en rotation l'unité de stockage 10, et plus particulièrement en rotation sur elle-même, sur un intervalle angulaire. L'intervalle angulaire est de préférence inférieur à 360°, plus préférentiellement encore inférieur à 180°. Ainsi, les connecteurs 110, 121 peuvent être désalignés et ne plus être en regard les uns des autres, empêchant la reconnexion électrique de l'unité de stockage 10.

Les socles 122 et 130 peuvent en outre être configurés pour pouvoir être retirés de l'unité de stockage 10 une fois en défaut, et remontés sur une nouvelle unité de stockage 10. Ainsi, l'unité de stockage 10 en défaut peut être remplacée dans le dispositif 1. Les socles 122 et 130 sont de préférence à base d'un matériau isolant électriquement, par exemple en polymère thermoplastique.

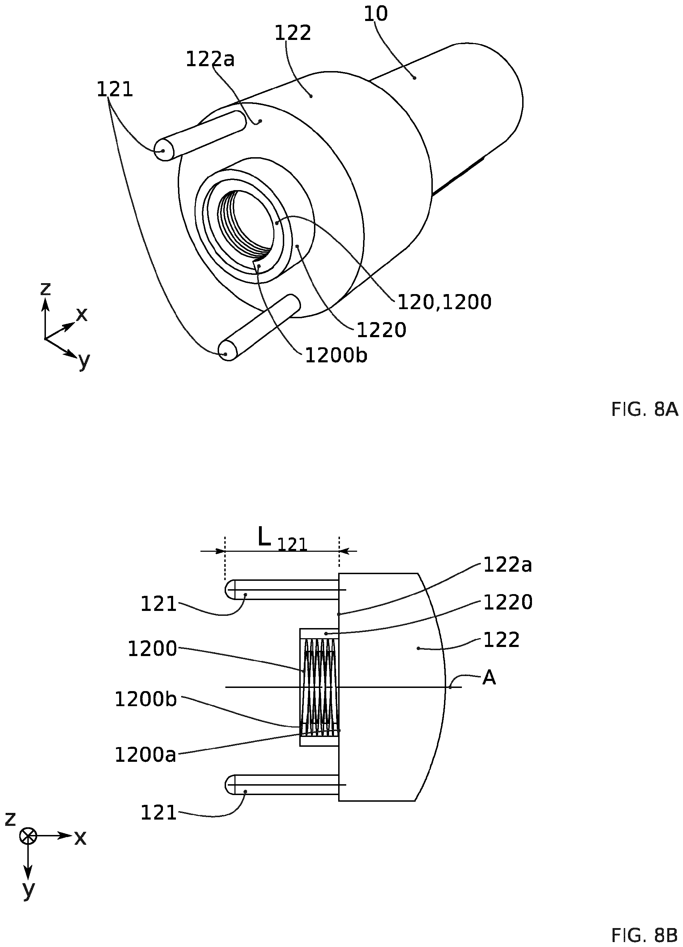

La coopération de l'élément thermosensible 1200 dans le système de connexion 12 est maintenant décrite en détail, en référence aux figures 8A à 9B. L'élément thermosensible 1200 peut s'étendre selon une direction sensiblement parallèle au déplacement de l'unité de stockage 10, par exemple la direction longitudinale x. L'élément thermosensible 1200 peut être sensiblement centré par rapport à l'unité de stockage 10, voire au système de connexion 12, selon une direction transversale au déplacement de l'unité de stockage 10, par exemple la direction y. Ainsi le déplacement de la première position à la deuxième position, induit par l'exercice de la force F, est facilité. Plus particulièrement, l'élément thermosensible peut s'étendre selon une direction sensiblement confondue avec l'axe central A d'une unité de stockage 10.

Le socle 122 du système de connexion peut comprendre sur sa face arrière 122a un logement 1220 configuré pour recevoir l'élément thermosensible 1200. Le logement est de préférence en regard du support 11. Dans sa position rétractée, l'élément thermosensible 1200 peut être au moins en partie disposé dans le logement 1220, voire totalement comme illustré en figure 8B. L'élément thermosensible 1200 est ainsi confiné dans le logement 1220, ce qui minimise son éventuelle thermalisation par son environnement. La réactivité de l'élément thermosensible 1200 lors d'un échauffement de l'unité de stockage est ainsi améliorée. En outre, dans la première position, l'élément thermosensible 1200 étant rétracté, le logement 1220 peut être disposé à proximité immédiate du support 11, comme illustré dans la figure 1B. Le confinement de l'élément thermosensible 1200 est ainsi amélioré. L'élément thermosensible 1200 peut affleurer l'ouverture du logement 1220 dans sa configuration rétractée, par exemple à sa deuxième extrémité 1200b. De façon synergique avec une proximité immédiate entre le support 11 et le logement 1220, l'exercice de la force F par l'élément thermosensible 1200 est facilité, dès que la température de l'élément thermosensible 1200 atteint la température seuil. Lorsque l'élément thermosensible 1200 est dans sa position déployée, l'élément thermosensible 1200 sort au moins en partie du logement 1220, comme illustré en figure 9A et 9B.

L'élément thermosensible 1200 peut être fixé dans le logement 1220 par une première portion 1200a, voire par sa première extrémité 1200a. L'élément thermosensible 1200 peut être en appui sur le support 11 pour exercer la force F. L'élément thermosensible 1200 peut notamment être en appui sur la face avant 1110 du support 11, par une deuxième portion 1200b, voire par sa deuxième extrémité 1200b. Le logement 1220 peut être sensiblement centré entre les connecteurs électriques 121 de sorte que la force F exercée par l'élément thermosensible 1200 soit retransmise aux connecteurs 121 de façon sensiblement égale entre eux.

L'élément thermosensible 1200 est maintenant détaillé. L'élément thermosensible peut être monolithique. L'élément thermosensible 1200 peut être à base ou fait d'au moins un matériau présentant une transition de phase à la température seuil déterminée. Lors de cette transition de phase, l'élément thermosensible peut passer d'une forme rétractée à au moins une forme déployée. Ainsi, en dessous de la température seuil, l'élément thermosensible 1200 est sous une première forme. Lorsque la température de l'élément thermosensible dépasse la température seuil, l'élément thermosensible 1200 passe sous une deuxième forme. Selon un exemple, la deuxième forme est plus étendue que la première forme dans la direction du déplacement de l'unité de stockage. Dans sa configuration déployée, l'élément thermosensible 1200 peut notamment présenter une longueur L₁₂₀₀ supérieur au double, voire au triple de sa longueur dans la configuration rétractée, comme l'illustre le passage de la figure 8B à la figure 9B. On peut prévoir que l'élément thermosensible 1200 passe sous une troisième forme à une deuxième température seuil.

De façon généralement connue, une transition de phase désigne la transformation physique d'un système, et notamment ici d'un matériau, d'une phase (vers une autre, induite par la variation d'un paramètre externe tel que par exemple la température. Un exemple de transition de phase est le changement d'état physique de la matière (par exemple entre solide et liquide et entre liquide et gaz). Un autre exemple de transition de phase est la transition de phase de solide à solide, entre deux phases solides du matériau. Une transition de phase n'implique donc pas nécessairement un changement d'état physique de la matière. Un changement d'état est un cas particulier de transition de phase.

De préférence, lors d'une transition de phase solide, le matériau passe d'une phase solide, dans laquelle le matériau présente une première forme, à une autre phase solide, dans laquelle le matériau présente une deuxième forme distincte de la première forme. Dans ce cas la transition de phase solide s'accompagne d'une déformation du matériau.

Selon un exemple, l'élément thermosensible 1200 est à base d'un alliage à mémoire de forme, présentant une transition de phase solide sensiblement à la température seuil. L'élément thermosensible peut plus particulièrement être un ressort à base d'un alliage à mémoire de forme. Le ressort peut être rétracté en dessous de la température seuil, et déployé en dessus de la température seuil. Ainsi, l'allongement de l'élément thermosensible est important, rapide et fiable. Le ressort peut être à base d'un alliage de cuivre présentant une température seuil de sensiblement 90 °C.

Selon un exemple alternatif, l'élément thermosensible 1200 est à base d'un matériau présentant un changement d'état à la température seuil déterminée. Ce changement d'état peut être de l'état liquide à l'état gazeux. Le matériau peut par exemple être encapsulé, par exemple sous forme de microcapsules. Au-delà de la température de changement d'état, les microcapsules peuvent se dilater et induire le déploiement de l'élément thermosensible 1200. Ce changement d'état peut être de l'état solide à l'état liquide, avec expansion du matériau lors de cette transition. Par exemple, l'actionneur 12 peut comprendre un piston relié à un matériau thermosensible dont la liquéfaction entraine un déploiement du piston. Le matériau peut être choisi de sorte que la température de fusion du matériau est comprise entre -101 °C et 150°C. La transition solide-liquide peut se dérouler progressivement sur une plage de température étendue, par exemple sur une gamme d'amplitude supérieure à 10 °C, ou de préférence à une température définie, typiquement sur une plage de température d'amplitude inférieure à 5°C.

Selon un exemple alternatif, l'élément thermosensible 1200 peut être à base ou fait d'au moins un matériau thermo-expansif, tel que par exemple une poudre expansive. Un matériau thermo-expansif peut augmenter de taille avec la température, par exemple lorsque sa température dépasse une température seuil. Ce matériau peut être une résine thermo-expansive, mis par exemple en forme par impression 3D.

Afin d'améliorer la conduction thermique de l'unité de stockage 10 à l'élément thermosensible 1200, ainsi que le long de l'élément thermosensible, le choix du matériau et/ou le design des pièces environnantes peuvent être adaptés. En alternative ou en complément, on peut prévoir d'ajouter des colles ou pâtes conductrices.

Notons que la longueur de course de l'élément thermosensible 1200, la température seuil et la force F exercée, peuvent être adaptées selon la nature et la forme de l'élément thermosensible 1200.

Comme énoncé précédemment, le dispositif 1 peut en outre comprendre un système d'aération 13 configuré pour évacuer des gaz susceptibles d'être émis par une unité de stockage 10 en défaut.

Les unités de stockage 10 comprennent généralement au moins un évent de dégazage, configuré pour évacuer de l'unité de stockage 10 les gaz générés lors d'un défaut de fonctionnement. L'évent de l'unité de stockage peut être disposé à une extrémité de l'unité de stockage 10, par exemple au voisinage d'un pôle de l'unité de stockage 10, et plus particulièrement au niveau du pôle positif. Un évent de dégazage est généralement formé d'un système à membrane et/ou à valve, et d'ouvertures disposées sur l'enveloppe externe de l'unité de stockage 10, la membrane et/ou la valve étant configurée pour maintenir une étanchéité entre l'intérieur de l'unité de stockage 10 et le milieu environnant. En cas de défaut de fonctionnement, les gaz générés par l'unité de stockage 10 induisent une augmentation de la pression interne de l'unité de stockage 10, et la rupture de la membrane et/ou l'ouverture de la valve. Les gaz sont alors évacués par les ouvertures.

Le système d'aération 13 est maintenant décrit en référence aux figures 5 à 7B. Le système d'aération 13 peut plus particulièrement coopérer avec le support 11 pour évacuer ces gaz dans un espace distinct de l'espace dans lequel est disposé la ou les unité(s) de stockage dans la première position. Pour cela, le support 11 peut comprendre un cadre 112 délimitant un logement 1120 de l'unité de stockage 10, au moins dans la première position, tel que décrit précédemment. Le support 11 peut en outre délimiter un espace d'évacuation 113 distinct du logement 1120. La délimitation entre l'espace d'évacuation 113 et le logement 1120 peut être faite par la face avant 1121 du cadre 112. Le système d'aération 13 peut présenter :
- une position ouverte de passage de gaz entre l'évent de dégazage d'une unité de stockage 10 et l'espace d'évacuation 113,
- une position fermée d'absence de passage d'air entre l'évent de dégazage d'une unité de stockage 10 et l'espace d'évacuation 113.

Le passage de la position ouverte à la position fermée du système d'aération 13 peut être induit par l'actionneur thermosensible 120, et plus particulièrement par l'élément thermosensible 1200. Ainsi, en cas de défaut d'une unité de stockage 10, le déplacement de l'unité de stockage10 de la première position à la deuxième position entraine le passage du système d'aération 13 de la position fermée à la position ouverte. Les gaz émis par l'unité de stockage 10 en défaut peuvent s'évacuer dans l'espace d'évacuation 113. Par conséquent, en plus d'une déconnexion électrique et/ou d'une déconnexion thermique au moins partielle d'une unité de stockage 10, un chemin préférentiel pour les gaz dégagés par cette unité est créé.

Dans la position ouverte, l'évent de dégazage d'une unité de stockage 10 et le logement 1120 peuvent présenter un passage des gaz réduit par rapport au passage des gaz entre l'évent de l'unité de stockage et l'espace d'évacuation 113. De préférence, l'évent de dégazage d'une unité de stockage 10 et le logement 1120 ne sont pas en communication fluidique. Les gaz générés par l'unité de stockage 10 sont ainsi préférentiellement évacués dans l'espace d'évacuation 113, et de préférence ils ne peuvent pas pénétrer dans le logement 1120. Le risque de propagation du défaut de fonctionnement à d'autres unités de stockage 10 est ainsi encore diminué.

Le cadre 112 peut être configuré pour loger au moins une, voire plusieurs unités de stockage 10. Le cadre 112 peut en outre être configuré de sorte que des unités de stockages 10 sont logées dans les logements 1120 distincts. Ces logements 1120 peuvent ne pas être en communication fluidique entre eux. Ainsi, le risque que des gaz émis par une unité en défaut se propagent à d'autres unités de stockage 10 est encore réduit.

Le système d'aération 13 peut comprendre un socle 130 tel que décrit précédemment. Le socle 130 peut comprendre des évents 131. Lorsque l'unité de stockage 10 est dans la première position, les évents 131 peuvent être isolés de l'espace 113. Selon l'exemple illustré dans la figure 5, les évents 131 peuvent être bloqués par la face avant 1121 du cadre 112. Notamment, les évents 131 peuvent être recouverts par le pourtour des ouvertures 1121a.

Lorsque l'unité de stockage 10 est dans une deuxième position, les évents 131 peuvent être en communication avec l'espace 113. Par exemple, le socle 130 peut coulisser dans les ouvertures 1121a de sorte que les évents 131 ne sont plus recouverts par le pourtour des ouvertures 1121a. Notons que les évents 131 peuvent ne plus être recouverts par le pourtour des ouvertures 1121a, que l'unité de stockage 10 soit dans la deuxième position en raccord électrique avec le support 11 ou non, comme illustré par les figures 6 et 7A.

Le socle 1030 peut être configuré de façon à freiner, voire bloquer, le passage des gaz entre l'évent de dégazage d'une unité de stockage 10 et le logement 1120. Pour cela, le socle peut comprendre un moyen d'étanchéité disposé à l'interface entre le socle 1030 et l'unité de stockage 10, par exemple sur le pourtour interne du socle 1030.

### Exemple de réalisation

Un exemple particulier de réalisation du dispositif est maintenant décrit. Une unité de stockage 10 cylindrique de format commercial 21700 est montée dans un socle 122 en acrylonitrile butadiène styrène (communément abrégé ABS). Un conducteur électrique est soudé au terminal positif de l'unité de stockage 10. Un autre conducteur électrique est soudé au terminal négatif de l'unité de stockage 10. Chacun de ces conducteurs est assemblé sur un connecteur électrique 121. Les connecteurs électriques 121 sont des fiches banane de 2mm. Les connecteurs électriques 121 sont connectés à des connecteurs complémentaires 110 du support 11.

Un ressort thermosensible 1200 à base d'un alliage de cuivre est collé par son extrémité 1200a dans le logement 1120 du socle 112. Le ressort thermosensible 1200 est en contact direct avec le support 11 au niveau de son autre extrémité 1200b. La transition de phase solide du ressort 1200 fait passer la longueur du ressort de 10 mm dans sa configuration rétractée à 25 mm dans sa configuration déployée. L'unité de stockage est ainsi éloignée du support 11 et une déconnexion des connecteurs électrique 121, 110 est induite.

Lors du développement de l'invention, une série d'essais a permis d'observer l'action passive du ressort à mémoire de forme sous l'effet d'un flux d'air à 150°C. Une déconnection électrique et mécanique de l'unité de stockage 10 du support a été obtenu, et ce, pour différentes orientations du dispositif 1. Le passage du module d'aération de la position fermée à la position ouverte à en outre été observé suite à l'action passive du ressort à mémoire de forme, sous l'effet d'un flux d'air à 150°C.

Au vu de la description qui précède, il apparaît clairement que l'invention propose un dispositif d'alimentation électrique améliorant la déconnection d'une unité de stockage lors d'un défaut de fonctionnement, par rapport aux solutions existantes.

L'invention n'est pas limitée aux modes de réalisations précédemment décrits et s'étend à tous les modes de réalisation couverts par les revendications.

Bien que les exemples décrits illustrent notamment un déplacement absolu de l'unité de stockage 10 par rapport au support 11, on peut prévoir que le support 11 soit mobile entre une première position et une deuxième position dans le dispositif 1. Par exemple, le support 11 coulisse en translation entre la première position et la deuxième position.

On peut en outre prévoir que l'élément thermosensible 1200 exerce une force sur le support 11, par exemple pour induire son déplacement entre une première position et une deuxième position dans le dispositif 1.

On peut prévoir en outre que le logement 1220 de l'élément thermosensible 1200 soit disposé sur le support.

Les unités de stockage illustrées dans les dessins sont de forme cylindrique. On peut prévoir que le dispositif 1 soit adapté à des unités de stockage de format et de taille variées.

### LISTE DES REFERENCES

- 1: Dispositif d'alimentation
- 10, 10', 10": Unité de stockage
- 11: Support
- 110: Connecteur électrique
- 111: Base
- 111': Circuit imprimé
- 1110: Face avant
- 1111: Face arrière
- 1112: Face latérale
- 112: Cadre
- 1120: Logement
- 1121: Face avant
- 1121a: Ouvertures
- 1122: Face latérale
- 113: Espace d'évacuation
- 12, 12', 12": Système de connexion
- 120: Actionneur
- 1200: Élément thermosensible
- 1200a: Première extrémité
- 1200b: Deuxième extrémité
- 121: Connecteur électrique
- 1210: Pastille conductrice
- 1211: Raccord
- 122: Socle
- 122a: Face arrière
- 1220: Logement
- 123: Module anti-retour
- 13, 13': Système d'aération
- 130: Socle
- 131: Évent
- 2: Appareil

## Revendications

1. Dispositif (1) d'alimentation électrique comprenant :
• au moins une unité de stockage (10) d'énergie électrique,
• un support (11) configuré pour recevoir l'au moins une unité de stockage (10) au moins dans une première position, dans laquelle l'au moins une unité de stockage (10) est solidaire et raccordée électriquement au support (11),
• un système de connexion (12) de l'au moins une unité de stockage (10) au support (11), comprenant un actionneur (120), l'actionneur (120) comprenant un élément thermosensible (1200),
le dispositif (1) étant **caractérisé en ce que**, lorsque la température de l'élément thermosensible (1200) dépasse une température seuil prédéterminée, l'élément thermosensible (1200) est configuré pour exercer une force (F) sur au moins l'un parmi l'unité de stockage (10) et le support (11), de façon à induire un déplacement relatif de l'au moins une unité de stockage (10) par rapport au support (11), de la première position à une deuxième position, dans laquelle l'au moins une unité de stockage (10) est dans un état de moindre connexion thermique avec le support (11), et dans un état dans lequel l'au moins une unité de stockage (10) n'est pas raccordée électriquement au support (11), l'au moins une unité de stockage (10) étant désolidarisée du support (11) lors du déplacement relatif de la première à la deuxième position de sorte que l'unité de stockage n'est plus reliée au support (11) dans la deuxième position.

2. Dispositif (1) selon la revendication précédente, dans lequel l'élément thermosensible (1200) présente une configuration rétractée et une configuration déployée, de sorte que, lorsque la température de l'élément thermosensible (1200) dépasse la température seuil prédéterminée, l'élément thermosensible (1200) passe de l'une parmi la configuration rétractée ou la configuration déployée, à l'autre parmi la configuration rétractée ou la configuration déployée, induisant l'exercice de la force (F) sur au moins l'un parmi l'unité de stockage (10) et le support (11).

3. Dispositif (1) selon la revendication précédente, dans lequel l'élément thermosensible (1200) est à base d'un matériau présentant une transition de phase à la température seuil déterminée.

4. Dispositif (1) selon la revendication précédente, dans lequel l'élément thermosensible (1200) est à base d'un alliage à mémoire de forme.

5. Dispositif (1) selon la revendication 3, dans lequel l'élément thermosensible (1200) est à base d'un matériau présentant un changement d'état à la température seuil déterminée.

6. Dispositif (1) selon la revendication 3, dans lequel l'élément thermosensible (1200) est à base d'un matériau expansif avec une augmentation de la température, par exemple une poudre expansive.

7. Dispositif (1) selon l'une quelconque des revendications précédentes, dans lequel l'élément thermosensible (1200) est configuré de sorte que la température seuil prédéterminée soit comprise entre une température de surchauffe et une température d'emballement thermique de l'au moins une unité de stockage (10).

8. Dispositif (1) selon l'une quelconque des revendications précédentes, dans lequel :
• le système de connexion (12) comprend des connecteurs électriques (121) reliés électriquement à l'unité de stockage (10), et
• le support (101) comprend des connecteurs électriques (110) complémentaires et disposés en regard des connecteurs (121) du système de connexion (12), et
• le déplacement relatif de la première position à la deuxième position entraîne un éloignement relatif des connecteurs électriques (121) du système de connexion (12) par rapport aux connecteurs électriques (110) du support (11).

9. Dispositif (1) selon la revendication précédente, dans lequel le déplacement relatif de la première position à la deuxième position entraîne un éloignement relatif des connecteurs électriques (121) du système de connexion (12) par rapport aux connecteurs électriques (110) du support (11), ledit éloignement étant supérieur à la longueur des connecteurs électriques (121) du système de connexion (12) et/ou des connecteurs électriques (110) du support (11), prise dans la direction de l'éloignement relatif, de façon à déconnecter électriquement l'unité de stockage (10).

10. Dispositif (1) selon l'une quelconque des revendications précédentes, dans lequel le support est configuré pour guider l'unité de stockage (10) selon un mouvement principal de translation lors du déplacement relatif de la première position à la deuxième position.

11. Dispositif (1) selon l'une quelconque des revendications précédentes, dans lequel le système de connexion (12) comprend un module anti-retour (123) configuré pour empêcher un déplacement relatif de l'au moins une unité de stockage (10) par rapport au support (11), de la deuxième position à la première position.

12. Dispositif (1) selon l'une quelconque des revendications précédentes, dans lequel le support (11) comprend un circuit imprimé (111').

13. Appareil (2) comprenant au moins un dispositif d'alimentation (1) électrique selon l'une quelconque des revendications précédentes.
